# EUROPEAN PATENT APPLICATION

(11) **EP 2 648 039 A2**
(43) Date of publication of application: **09.10.2013**
(21) Application number: 13158802.2
(22) Date of filing: 27.08.2004
(51) Int. Cl.: G02F 1/35, G02F 1/37, H01S 3/00, H01S 3/10, H01S 3/067, G02F 1/39, H01S 3/08, B23K 26/06, H01S 3/06, H01S 3/23, H01S 3/094, H01S 3/115

(54) **High energy optical fiber amplifier for picosecond-nanosecond pulses for advanced material processing applications**

(30) Priority: 27.08.2003 US 498056 P
(62) Divisional of application: 04786591.0
(71) Applicant: Imra America, Inc., Ann Arbor, MI 48105 (US)
(72) Inventor: Fermann, Martin, E., Dexter, MI 48130 (US); Hartl, Ingmar, Ann Arbor, MI 48104 (US); Imeshev, Gennady, Ann Arbor, MI 48105 (US); Patel, Rajesh, S., Fremont, CA 94555 (US)
(74) Representative: Hartig, Michael

(57) **Abstract**

A fiber-based source for high-energy picosecond and nanosecond pulses is described, By mit-nimizing nonlinear energy limitations in fiber amplifiers, pulse energies close to the damage threshold of optical fibers can be generated. The implementation of optimized seed sources in conjunction with amplifier chains comprising at least one nonlinear fiber amplifier allows for the generation of near bandwidth-limited high-energy picosecond pulses. Optimized seed sources for high-energy pulsed fiber amplifiers comprise semiconductor lasers as well as stretched mode locked fiber lasers. The maximization of the pulse energies obtainable from fiber amplifiers further allows for the generation of high-energy ultraviolet and IR pulses at high repetition rates.

## Description

This is a continuation-in-part of U.S. Application No. 10/645,662 filed August 22, 2003, which is a continuation-in-part of U.S. Application No. 09/116,241, filed July 16,1998. This application also claims benefit pursuant to 35 U.S.C. § 119(e)(1) of the filing date of U.S. Provisional Application No. 60/498,056 filed on August 27, 2003 pursuant to 35 U.S.C. § 111(b). The disclosures of U.S. Application No. 10/645,662 and U.S. Provisional Application No. 60/498,056 are each incorporated by reference in their entirety.

### Field of the Invention

The present invention relates to the construction of compact sources of high-energy fiber laser pulses, generating pulse widths in the picosecond - nanosecond regime and their application to laser processing of materials.

### Background of the Invention

Over the last several years, fiber lasers and amplifiers have been regarded as the most promising candidates for pulse sources for industrial applications, due to their unique simplicity of construction. Large core fiber amplifiers, and specifically large core diffraction limited multi-mode amplifiers (U.S. Patent No. 5,818,630 issued to Fermann et al.), enable the amplification of optical signals to levels where laser processing applications such as micro-machining and marking become possible (Galvanauskas et al., U.S. Patent Application No. 09/317,221, abandoned, now U.S. Patent Application No. 10/645,662). Since laser marking and micro-machining are dependent on the supply of high peak power pulses, it is advantageous to use such fiber amplifiers for the amplification of nanosecond regime and picosecond regime seed pulses, as supplied, for example, by micro-chip lasers, semiconductor lasers or other general Q-switched sources. A high-power fiber amplifier for pulses generated with a frequency-modulated semiconductor laser was previously described in U.S. Patent No. 5,400,350 issued to Galvanauskas, whereas a micro-chip laser seed was described in U.S. Patent Application No. 09/317,221, abandoned, now U.S. Patent Application No. 10/645,662.

The maximum pulse energy that can be generated in high-power fiber amplifiers is generally limited by the bulk damage threshold of silica glass that corresponds to a fluence of approximately F_{d} ≈ 100 J/cm² for a 1 nanosecond pulse. For a fiber with a fundamental mode diameter of 30 micrometers, F_{d} = 100 J/cm² corresponds to a pulse energy of 700 microjoules for a 1 nanosecond pulse.

However, in conventional fiber amplifiers optimized for generating high pulse energies, rather than by optical damage, the highest obtainable pulse energies are limited by either Raman scattering, Brillouin scattering or self-phase modulation depending on the implemented seed source. For example, when amplifying pulses with a pulse width of 1 nanosecond, Raman scattering limits the achievable pulse energies when the effective amplifier length exceeds approximately 20 centimeters.

On the other hand, when amplifying pulses with a bandwidth equal to or smaller than the Brillouin gain bandwidth (corresponding to 100 MHz in silica fibers), the achievable pulse energies can be further limited by the onset of stimulated Brillouin scattering. Brillouin scattering is typically the dominant mechanism limiting the achievable pulse energies for bandwidth limited pulses with a width > 10 nanoseconds. Various methods are used to suppress Brillouin scattering. These methods generally increase the bandwidth of the injected optical signal by either frequency-dithering of semiconductor lasers (U.S. Patent No. 5,473,625 issued to Hansen et al.), the implementation of frequency-modulators (U.S. Patent No. 4,560,246 issued to Cotter), or the use of a line-narrowed amplified spontaneous emission source (U.S. Patent No. 5,295,209 issued to Huber).

However, to date the suppression of stimulated Brillouin scattering with a unidirectionally chirped pulse source has not been considered.

In the pulse width range from 100 picoseconds to 10 nanoseconds, as predominant in commercial laser micro-machining systems to date, self-phase modulation typically leads to significant spectral broadening in fiber amplifiers, thus mitigating the effect of Brillouin scattering and allowing an increase in pulse energy to the Raman limit. For femtosecond seed pulses (U.S. Patent Nos. 5,880,877 and 6,014,249 to Fermann et al.) it was previously shown that self-phase modulation can be used also for spectral compression. For picosecond seed pulses (Spectral narrowing of ultrashort laser pulses by self-phase modulation in optical fibers, Applied Physics Letters, Vol. 63, 1993, pp. 1017-19; and Limpet et al., SPM induced spectral compression of picosecond pulses in a single-mode Yb-doped fiber amplifier, Optical Society of America TOPS, Vol. 68, 2002, pp. 168-75), it was previously shown that spectral compression can be used to produce near bandwidth limited pulses with a duration of a few picoseconds. Injecting negatively chirped pulses into positive dispersion optical fibers induces spectral compression, *i.e.,* by injecting pulses where the blue spectral components are advanced versus the red spectral components. Self-phase modulation can then transfer spectral components at the pulse edges into the center of the pulse spectrum, creating a near-bandwidth limited pulse after a certain propagation distance.

To date, however, no method has been described that adapts the spectral compression technique to the generation of high energy near bandwidth limited pulses with a pulse width > 20 picoseconds. Moreover, all of the prior art was based on the use of complicated bulk laser seed sources that were stretched in additional large scale bulk optic pulse stretchers in order to produce the required pulse chirp for spectral compression. None of the prior art implementations bears any relevance to an industrially viable laser system. Equally, none of the prior art suggested the use of the spectral compression technique to generate optical pulses with energy exceeding a few microjoules or the use of the spectral compression technique to produces pulses with pulse energy near the bulk damage threshold of optical fibers.

Though laser micro-machining and material processing using nanosecond pulses is widely practiced today, many applications need to resort to high-power picosecond and femtosecond pulses. Chirped pulse amplification can be readily implemented to generate femtosecond and picosecond pulses from fiber amplifiers, as discussed in U.S. Patent No. 5,499,134 issued Galvanauskas et al. and U.S. Patent No. 5,847,863 issued to Galvanauskas et al. Alternatively, parametric chirped pulse amplification pumped by a micro-chip laser amplified in fiber and solid-state amplifiers can be used. In this case, femtosecond and picosecond pulses are generated by using fiber amplifiers as part of a system as described by Galvanauskas et al. in Diode-pumped parametric chirped pulse amplification system with 1 mJ output energies, 12th, Conf. on Ultrafast Phenomena, pp. 617-18 (2004).

To date, the prior art fails to suggest fiber based chirped pulse amplification systems in conjunction with solid-state booster amplifiers for the generation of pulses with energies exceeding 10 microjoules. Preferably, a chirped pulse amplification system comprises a wide-bandwidth seed source and an amplifier chain that has overlapping gain bandwidths to avoid the need for complicated frequency conversion schemes between the seed source and the amplifier chain. Such a system comprising complicated frequency conversion schemes between seed and amplifier chain was previously described by U.S. Patent No. 6,760,356 issued to Ebert et al. Galvanauskas et al. in Diode pumped parametric chirped pulse amplification system with mJ output energies, Optical Society of America, pp. 617-19 (2000) disclose the use of fiber amplifiers, in conjunction with solid-state amplifiers and micro-chip lasers, but resort to the use of parametric amplification in a nonlinear crystal to obtain compressible high energy pulses. Such parametric amplifiers require the use of high energy pump pulses with a pulse width of the order of 1 nanosecond. Synchronization requirements between the pump pulses and the seed source and the lack of readily available high energy, short pulse pump lasers, complicates the use of such systems. In yet another system, Hofer et al. in Regenerative Nd:glass amplifier seeded with a Nd:fiber laser, Optics Letters, Vol. 17, Issue 11, Page 807 (June 1992) describes a bulk Nd:glass regenerative amplifier seeded with a Nd:fibet oscillator. However, only pulse energies of 10 microjoules were obtained, because the system lacked an appropriate pulse stretching stage after the seeder.

Femtosecond and picosecond pulse lasers offer the great benefit of precision and cleanliness in laser micro-machining of various materials. However, laser micro-machining using ultraviolet (UV) lasers with nanosecond and picosecond pulse widths provide a good alternative to femtosecond lasers in some cases. More rapid and precise machining of organic materials can, for example, be performed with ultraviolet pulses with a width in the nanosecond and picosecond range, though to date high-power ultraviolet pulses could not be generated with fiber-based sources because of the severe nonlinear limitations of optical fibers. Rather, state of the art ultraviolet lasers are based on frequency-upconverted bulk Q-switched solid-state lasers as, for example, described in U.S. Patent No. 5,835,513 issued to Pieterse et al.

In prior art fiber-related work, a pulse energy of only 2.5 microjoules at a wavelength of 386 nanometers and a pulse energy of 9 microjoules at a wavelength of 773 nanometers were obtained with a frequency-upconverted Er-amplifier chain (H. Kawai et al., UV light source using fiber amplifier and nonlinear wavelength conversion, Conf. on Lasers and Electro-Optics, CLEO, 2003, paper CtuT4). In related work, the pulse energy was only 1 microjoule at a wavelength of 630 nanometers obtained by sum-frequency-generation of a Yb fiber laser with an Er fiber laser (P. Chambert et al., 3.5 W sum frequency, 630 nm generation of synchronously seeded Yb and Yb-Er fiber amplifiers in PPKTP, Conf. on Advanced Solid State Photonics, ASSP, 2003, paper TuC3). Other prior art reported a pulse energy of ≈ 1 microjoule at a wavelength of 530 nanometers by frequency doubling the output from a Yb fiber amplifier (P. A. Chambert et al., Deep ultraviolet, tandem harmonic generation using kW peak power Yb fibre source, Electronics Letters, Vol. 38, No. 13 (2002), pp. 627-28). The same article reported a pulse energy of 20 nanojoules at a wavelength of 265 nanometers and speculated about the possibility of generating a pulse energy of 60 nanojoules by implementing an optimized quadrupling crystal, such as CLBO or BBO. Clearly, the pulse energies from frequency-converted fiber amplifier chains reported by the prior art was severely restricted because of the implementation of non-optimized fibers and the lack of appropriate polarization control. For example, the ultraviolet source described by Chambert *et al.* had to resort to polarization controllers to obtain the required polarization state for optimum frequency conversion in the frequency conversion crystals.

In related work (U.S. Patent No. 6,181,463 issued to Galvanauskas et al.), a high-power fiber amplifier chain was described for pumping of an optical parametric amplifier. However, though frequency doubling of the amplifier chain was considered, no other means for frequency conversion of the pulses generated by the amplifier chain were described. In other early work (U.S. Patent Publication No. 2004/0036957) on high energy fiber pulse amplifiers, more general frequency conversion schemes, such as frequency tripling, quadrupling, optical parametric generation and amplification were mentioned to extend the wavelength coverage of fiber systems. However, no optimum system configuration comprising optimal seed lasers in conjunction with fiber amplifiers for the generation of high-energy frequency converted pulses was suggested.

Hence, a fiber based high-energy pulse source operating in the 20 picoseconds to 10 nanoseconds pulse width range operating close to the damage threshold of silica fibers and optimized for light generation in the ultraviolet wavelength range remains elusive. Equally, no prior art exists that uses fiber-based systems for the generation of high-energy frequency-downconverted pulses. Moreover, a combination of such a source with a bulk solid-state laser amplifier has not been considered to date.

### SUMMARY OF THE INVENTION

The present invention relates to the use of low amplitude ripple chirped fiber gratings, and ordinary solid-core fibers, or holey or air-hole fibers to stretch the pulses from picosecond pulse sources to a width in the picosecond-nanosecond range, creating unidirectionally chirped pulses with sufficient bandwidth to suppress stimulated Brillouin scattering in high-power fiber amplifiers. Pulses with energies exceeding 20 microjoules can be obtained by incorporating stretched pulse widths exceeding 100 picosecond in conjunction with large-mode fiber amplifiers. Large-mode fiber amplifiers based on single-mode solid fibers, holey fibers and near diffraction-limited multi-mode fibers can be incorporated. Particularly efficient high power amplifiers are based on Yb-doped double-clad fiber amplifiers. Close to diffraction-limited outputs from multi-mode fiber amplifiers can be obtained by preferential launching of the fundamental mode in the multi-mode fiber amplifiers (where the fibers are either conventional solid fibers or holey fibers). Additional mode-filters further improve the mode-quality of multi-mode fiber amplifiers, as described in U.S. Provisional Application No. 60/536,914. These mode-filters can be constructed from adiabatically coiled fibers with gradually changing bend radius.

The high-energy pulses can further be frequency up-converted using conventional nonlinear doubling, tripling, quadrupling, etc. crystals. The high-energy frequency-up-converted pulses are used in material processing. Frequency-down-conversion can equally be implemented, enabling the application of fiber based systems to remote sensing.

By implementing a negative unidirectional chirp, spectral compression in high-power fiber amplifier chains can be exploited to generate near-bandwidth limited picosecond-nanosecond pulses to maximize the efficiency of frequency up- and down-conversion. By using fiber based picosecond pulse seed sources, a particularly compact set-up can be obtained. Optimum seed pulse widths for spectral compression are selected by dispersion control of the fiber seed sources using chirped fiber Bragg gratings as cavity mirrors. In spectral compression, the incorporation of low amplitude ripple seed sources in conjunction with fiber stretcher gratings, holey fiber and air-hole fiber stretchers minimizes spectral pedestals as well as the avoidance of any spectral amplitude modulation inside the amplifier chains. Spectral pedestals are further minimized by incorporation of stretched pulses of parabolic shape.

A particularly simple source of unidirectionally chirped pulses can be constructed by the incorporation of frequency-modulated distributed Bragg reflector diode seed lasers, generating nanosecond regime chirped pulses with freely selectable repetition rates. By implementing negatively chirped pulses, the bandwidth of the amplified pulses can be minimized via spectral compression.

To increase the pulse energy beyond the bulk damage threshold of optical fibers, bulk booster amplifiers such as Nd:Vanadate, Nd:YAG, Nd:YLF, Yb:YAG, Nd and Yb: glass, KGW, KYW, S-FAP, YALO, YCOB, GdCOB and others can be incorporated, where spectral compression can be implemented to match the bulk amplifier bandwidth to the bandwidth of the pulses generated by the fiber amplifier chains. Additional frequency-up conversion allows the construction of high repetition rate ultraviolet and infrared sources operating with high average powers.

High-energy picosecond and femtosecond pulses can also be obtained by combination of bulk booster amplifiers with fiber based chirped pulse sources in conjunction with appropriate pulse stretchers and compressors. For narrow band bulk booster amplifiers, the use of grism based pulse compressors allows a particularly compact set up.

A first embodiment of the present invention comprises a pulse source that generates pulses at a repetition rate greater than or equal to 1 kHz with a pulse width between 20 picoseconds and 20 nanoseconds and a pulse energy greater than or equal to 10 microjoules. The pulse source comprises a seed source that produces seed pulses and a fiber amplifier chain that receives the pulses from the seed source and produces pulses with a pulse energy greater than or equal to 1 microjoule. The fiber amplifier chain comprises at least one large-core, cladding-pumped polarization maintaining fiber amplifier with a core diameter greater than or equal to 12 micrometers. The pulse source also comprises at least one bulk optical element.

The seed source of the first embodiment may comprise one of a semiconductor source of amplified spontaneous emission and a fiber-based source of amplified spontaneous emission. In addition, the seed source may comprise one of a semiconductor laser, a micro-chip laser and a fiber laser. Preferably, the semiconductor laser seed source comprises means for increasing the spectral bandwidth of the pulses emitted from said semiconductor laser seed source. The fiber laser seed source is mode locked, and can further comprise a fiber grating, a holey fiber or an air-hole fiber pulse stretcher.

The fiber amplifier chain of the first embodiment comprises one of Nd, Yb, Er/Yb, Nd/Yb and Tm doped amplifier fibers. The fiber amplifier chain amplifies pulses in the 900-1600 nanometer and 1500-3000 nanometer wavelength ranges. Preferably, the bandwidth of a pulse emerging from the fiber amplifier chain is larger than 0.1 nanometers, or smaller than 1 nanometer. The pulses emerging from the fiber amplifier chain can have a rectangular temporal intensity profile, or arbitrary intensity profile.

The bulk optical element of the first embodiment frequency converts the pulses produced by the fiber amplifier chain, *i.e.,* enabling frequency-down conversion. The bulk optical element also enables frequency-tripling, frequency-quadrupling and frequency-quintupling.

A second embodiment of the present invention comprises a pulse source that generates pulses at a repetition rate greater than or equal to 1 kHz with a pulse width between 20 picoseconds and 20 nanoseconds and a pulse energy greater than or equal to 10 microjoules. The pulse source comprises a seed source producing seed pulses, and a fiber amplifier chain that receives the seed pulses and produces pulses with a pulse energy greater than or equal to 1 microjoule. The fiber amplifier chain comprises at least one large-core, cladding-pumped polarization maintaining fiber amplifier with a core diameter greater than or equal to 12 micrometers. The pulse source further comprises at least one bulk optical element that amplifies the pulses produced by the fiber amplifier chain.

The seed source of the second embodiment may comprise one of a semiconductor source of amplified spontaneous emission and a fiber-based source of amplified spontaneous emission. In addition, the seed source may comprise one of a semiconductor laser, a micro-chip laser and a fiber laser. Preferably, the semiconductor laser seed source comprises means for increasing the spectral bandwidth of the pulses emitted from said semiconductor laser seed source. The fiber laser seed source is mode locked, and can further comprise a fiber grating, a holey fiber or an air-hole fiber pulse stretcher.

The fiber amplifier chain of the second embodiment comprises one of Nd, Yb, Er/Yb, Nd/Yb and Tm doped amplifier fibers. The fiber amplifier chain amplifies pulses in the 900-1600 nanometer and 1500-3000 nanometer wavelength ranges. Preferably, the bandwidth of a pulse emerging from the fiber amplifier chain is larger than 0.1 nanometers, or smaller than 1 nanometer. The pulses emerging from the fiber amplifier chain can have a rectangular temporal intensity profile, or arbitrary intensity profile.

The bulk optical element of the second embodiment may comprise a rare-earth-doped crystal or a transition metal-doped crystal. Specifically, the bulk optical element may comprise one of a Nd:Vanadate, Nd:YAG, Nd:YLF, Yb:YAG, Nd and Yb: glass, KGW, KYW, S-FAP, YALO, YCOB and GdCOB amplifier.

A third embodiment of the present invention comprises a pulse source generating pulses with a pulse width between 20 picoseconds and 20 nanoseconds. The pulse source comprises a seed source producing seed pulses with a predetermined spectral width, and a fiber amplifier chain receiving the seed source pulses and producing pulses with a pulse energy greater than or equal to 1 microjoule. The spectral width of the pulses emerging from the amplifier chain is preferably smaller than the spectral width of the seed pulses injected from the seed source. The last amplifier of the amplifier chain may receive negatively chirped pulses that can further incorporate a parabolic intensity profile.

The seed source of the third embodiment may comprise one of a semiconductor source of amplified spontaneous emission and a fiber-based source of amplified spontaneous emission. In addition, the seed source may comprise one of a semiconductor laser, a micro-chip laser and a fiber laser. Preferably, the semiconductor laser seed source comprises means for increasing the spectral bandwidth of the pulses emitted from said semiconductor laser seed source. The fiber laser seed source is mode locked, and can further comprise a fiber grating pulse stretcher, an ordinary solid-core fiber stretcher or a holey or air-hole fiber stretcher, wherein the mode locked fiber laser emits seed pulses that are preferably stretched in a negatively chirped fiber grating pulse stretcher or a negative dispersion fiber stretcher. Preferably, the reflectivity ripple of the grating is less than 10% of the peak reflectivity of the grating, and more preferably, less than 1% of the peak reflectivity of the grating. The seed source may also comprise a three-section semiconductor distributed Bragg reflector laser producing negatively chirped pulses.

The fiber amplifier chain of the third embodiment comprises one of Nd, Yb, Er/Yb, Nd/Yb and Tm doped amplifier fibers. The fiber amplifier chain amplifies pulses in the 900-1600 nanometer and 1500-3000 nanometer wavelength ranges. Preferably, the bandwidth of a pulse emerging from the fiber amplifier chain is larger than 0.1 nanometers, or smaller than 1 nanometer. The pulses emerging from the fiber amplifier chain can have a rectangular temporal intensity profile, or arbitrary intensity profile.

The pulse source of the third embodiment further comprises a bulk optical amplifier, which may comprise a rare-earth-doped crystal or a transition metal-doped crystal. Specifically, the bulk optical amplifier may comprise one of a Nd:Vanadate, Nd:YAG, Nd:YLF, Yb:YAG, Nd: and Yb: glass, KGW, KYW, S-FAP, YALO, YCOB and GdCOB amplifier.

The pulse source of the third embodiment may comprise a bulk optical element for frequency conversion. The bulk optical element frequency converts the pulses produced by the fiber amplifier chain, *i.e*., enabling frequency-down conversion. The bulk optical element also enables frequency-tripling, frequency-quadrupling and frequency-quintupling.

A fourth embodiment of the present invention comprises a pulse source generating pulses with a pulse width between 10 femtoseconds and 1000 picoseconds. The pulse source comprises a seed source producing seed pulses with a pulse width less than or equal to 200 picoseconds, and a pulse stretcher stretching the pulses produced by the seed source by a predetermined factor, preferably more than a factor of around 30. The pulse source can also comprise a fiber amplifier chain incorporating at least one fiber amplifier that receives the stretched pulses from the pulse stretcher and produces pulses with a pulse energy greater and or equal to 200 picojoules. The at least one amplifier can be also configured in a master-oscillator power amplifier arrangement, where pulse stretching can also be implemented after pulse amplification in the at least one amplifier.

The pulse source also comprises at least one bulk optical amplifier element that amplifies the pulses emitted from the fiber amplifier chain by a second predetermined factor, preferably more than a factor of 10. The pulse source also comprises a pulse compressor for recompressing the pulses emitted from the bulk optical amplifier element to near the bandwidth limit.

The seed source of the fourth embodiment preferably comprises a modelocked fiber laser. The fiber laser seed source preferably includes a fiber grating pulse stretcher or alternatively an ordinary solid core fiber stretcher, or a holey or air-hole fiber stretcher, wherein the mode locked fiber laser emits seed pulses stretched in a chirped fiber grating pulse stretcher or the fiber stretchers.

The fiber amplifier chain of the fourth embodiment may comprise one of Nd, Yb, Er/Yb, Nd/Yb and Tm doped amplifier fibers. The fiber amplifier chain amplifies pulses in the 900-1600 nanometer and 1500-3000 nanometer wavelength ranges.

The bulk optical amplifier element of the fourth embodiment comprises a bulk optical amplifier element, which may comprise a rare-earth-doped crystal or a transition metal-doped crystal. Specifically, the bulk optical amplifier may comprise one of a Nd:Vanadate, Nd:YAG, Nd:YLF, Yb:YAG, Nd: and Yb: glass, KGW, KYW, S-FAP, YALO, YCOB and GdCOB amplifier.

Both multi-pass and regenerative amplifier configurations can be implemented.

The pulse compressor of the fourth embodiment may comprise a grism element or other conventional pulse compressors, such as a Treacy compressor.

The pulse source of the fourth embodiment may comprise a bulk optical element for frequency conversion. The bulk optical element frequency converts the pulses produced by the amplifier system, *i.e*., enabling frequency-down conversion. The bulk optical element also enables frequency-tripling, frequency-quadrupling and frequency-quintupling.

### BRIEF DESCRIPTION OF THE DRAWINGS

Aspects of the present invention will become more apparent by describing in detail exemplary, non-limiting embodiments thereof with reference to the accompanying drawings. In the drawings:

FIG. 1 is a diagram of a generic scheme for the generation of unidirectionally chirped pulses using a low amplitude ripple fiber grating pulse stretcher.

FIG. 2a is a diagram of a spirally coiled high-power fiber amplifier.

FIG. 2b is a diagram of a biconically coiled high-power fiber amplifier.

FIG. 3 is a diagram of a generic scheme for the generation of unidirectionally chirped pulses using a frequency-modulated diode laser seed source.

FIG. 4 is a diagram of a fiber-based source for the generation of high-energy ultraviolet pulses.

FIG. 5 is a diagram of a fiber-based source for the generation of high-energy pulses using a solid-state booster amplifier.

FIG. 6 is a diagram of a fiber-based source for the generation of high-energy femtosecond and picosecond pulses using a solid-state booster amplifier.

### DESCRIPTION OF THE EMBODIMENTS

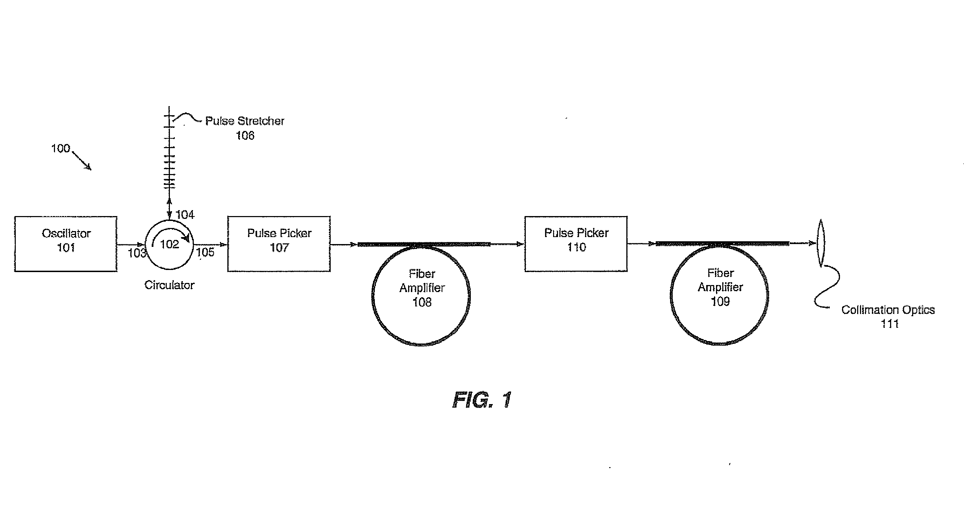

FIG. 1 represents an exemplary embodiment of the invention for the amplification of unidirectionally chirped pulses in optical fibers. A unidirectional chirp is a chirp that is either dominantly positive or negative during the pulse width. The compact system 100 comprises a mode locked fiber oscillator 101 generating a pulse train of optical pulses. Appropriate fiber oscillator designs are described in U.S. Application No. 10/627,069 and U.S. Provisional Application No. 60/519,447, each of which is herein incorporated by reference in its entirety. Particularly, fiber femtosecond and picosecond master oscillator-power amplifier configurations are useful as described in U.S. Provisional Application No. 60/519,447, since they can produce high energy pulses from a very simple configuration.

Fiber oscillators emitting near bandwidth limited pulses as well as chirped pulses with pulse durations of up to several picoseconds can be used. The pulse train is routed via an optical circulator 102 from the entry port 103 to a pulse stretcher 106 connected to circulator port 104, is reflected back and exits the circulator at port 105. In alternative implementations, the optical circulator can be replaced with a simple polarization beam splitter and appropriate waveplates and Faraday rotators to transfer the beam from port 103 via port 104 to port 105. Such implementations are well known in the state of the art and will not be shown here. As yet another alternative, a solid-core, a holey or air-hole fiber can be incorporated as a pulse stretcher. In conjunction with such fiber stretchers, circulators may not be required. Rather, the fiber stretchers can be inserted directly between ports 103 and 105 without the need of any non-reciprocal optical elements.

Stretcher 106 imposes a unidirectional chirp on the optical pulses. In the preferred embodiment, the pulse stretcher 106 is a chirped fiber Bragg grating. The use of a chirped fiber Bragg grating as a pulse stretcher 106 has the advantage of compact size and alignment insensitivity. Preferably, the chirped fiber Bragg grating has a smooth reflectivity profile, generating stretched pulses with minimal amplitude ripple to minimize any spectral broadening from self-phase modulation in subsequent power amplifiers, here represented by fiber amplifiers 108 and 109. For example, any modulation in the reflectivity profile of the fiber Bragg grating should be smaller than 10% of the peak reflectivity and preferably less than 1% of the peak reflectivity. Appropriate apodization of the fiber grating will readily obtain such a small reflectivity ripple. The chirp generated with the fiber Bragg grating as well as the grating bandwidth are further selected to suppress the onset of stimulated Brillouin scattering in subsequent amplifier chains. For example, a 1 meter long fiber grating that allows pulse stretching to 10 nanoseconds, a grating bandwidth of 0.5 nanometers at 1050 nanometers, corresponding to a frequency bandwidth of > 100 GHz, increases the Brillouin threshold approximately 1000 times compared to a bandwidth-limited 10 nanosecond pulse with a bandwidth of 100 MHz. When using fibers for pulse stretching, any amplitude ripple in the stretched pulses can further be minimized, because such fibers can have transmission spectra that vary smoothly with wavelength. To avoid the formation of amplitude ripple via the generation of spurious satellite pulses in the fiber stretchers, preferably single-mode fiber stretchers are incorporated.

In the preferred embodiment, the repetition rate of the train of stretched pulses is lowered by the pulse picker 107 (or optical gate) from the typical repetition rate of a mode locked fiber laser in the 10 MHz to 100 MHz range to a repetition rate of 25 kHz to 10 MHz. Lowering the oscillator repetition rate has the advantage of a higher ratio of pulse energy to average power of the amplified pulses at constant amplifier pump power. For example, an acousto-optic or electro-optic modulator can serve as the pulse picker 107. These optical assemblies are well known in the art and will not described further, To suppress amplified spontaneous emission between individual amplifier stages, additional, appropriately synchronized optical gates and optical isolators (not shown) are implemented. Referring to FIG. 1, a representative additional power amplifier 109 with an additional pulse picker 110 is shown. The pulse picker 107 can be omitted, allowing for the amplification of high-power pulses at high repetition rates directly at the oscillator pulse repetition rate. Collimation optics 111 are used to collimate the optical beam emerging from the fiber amplifier.

In the preferred embodiment, the "seed" pulses are amplified in fiber amplifiers 108 and 109 (or an alternative amplifier chain) which are based on a double-clad fiber pumped with high-power multi-mode diode lasers, though more conventional single-clad fiber amplifiers pumped with high-power single mode lasers can also be implemented. For double-clad fiber amplifiers, end-pumped or side-pumped amplifier configurations can be implemented, as discussed in U.S. Patent No. 5,854,865 issued to Goldberg, U.S. Patent No. 4,815,079 issued to Snitzer et al. and U.S. Patent No. 5,864,644 issued to DiGiovanni et al. These pumping arrangements are well known in the art and will not be discussed further.

To minimize the ripple in the spectral and time domain of the amplified pulses, any predominantly linear amplifiers in a representative amplifier chain are preferably constructed from near single-mode non-polarization maintaining fiber. Here, a linear amplifier is characterized as an amplifier with minimal self-phase modulation, *i.e*., such that the nonlinear phase delay of any amplified pulse is smaller than 5. To prevent nonlinear polarization scrambling, the final nonlinear power amplifier (*i.e*., an amplifier where the nonlinear phase delay of amplified pulses exceeds 5) is preferably constructed from polarization maintaining fiber and can also be multi-moded. To obtain a near-diffraction-limited output, the fundamental mode is coupled into the nonlinear power amplifier using techniques as, for example, discussed in U.S. Patent No. 5,818,630 issued to Fermann et al.

For a system with a non-linear power amplifier and a linear preamplifier as represented in FIG. 1, fiber amplifier 108 can be based on non-polarization maintaining near single-mode fiber and amplifier 109 can be based on polarization maintaining diffraction-limited multi-mode fiber. Additional bulk or fiber polarization controllers can further be inserted at the output of the linear fiber amplifier to preferentially launch a linear polarization state into the nonlinear fiber amplifier. These polarization controllers are well known in the state of the art and will not be further discussed here. When some spectral ripple can be tolerated in the output of the amplifier chain, the whole amplifier chain can also be constructed from polarization maintaining fiber, which has advantages in manufacturing, since the number of polarization controllers in the system can be minimized.

In a representative embodiment, fiber oscillator 101 is constructed from Yb fiber and generates 3.5 picosecond pulses with a spectral bandwidth of 0.5 nanometers and centered at 1040 nanometers. The pulse energy is 2 nanojoules at a repetition rate of 50 MHz. The oscillator pulses are stretched to a length of 1 nanosecond by fiber grating 106 and amplified to a pulse energy of 1 microjoules in fiber amplifier 108 at a repetition rate of 100 kHz. Power amplifier 109 generates pulses with an energy up to 100 microjoules and a spectral bandwidth of 0.6 nanometers, corresponding to a peak power of 100 kW. Fiber amplifier 108 has a core diameter of 12 micrometers and fiber amplifier 109 has a length of 2 meters; the core diameter is 30 micrometers with a V-value of around 5.4 at a wavelength of 1050 nanometers.

An optimum mode quality is obtained from the large-mode multi-mode fiber by preferentially launching the fundamental mode, as discussed in U.S. Patent No. 5,818,630 issued to Fermann et al. Additional mode-cleaning can be obtained by the implementation of mode-filters, such as fiber tapers and fiber coils, as is well known in the state of the art and is also described in U.S. Patent No. 5,818,630. However, coiled fibers generally have a bend loss that is a periodic function of wavelength as well as curvature due to a variety of effects. For example, any abrupt change in the radius of curvature in an optical fiber leads to mode-coupling and periodic losses depending on the phase evolution between the excited modes, an effect known as "transition loss." Other periodic losses in curved fiber can arise from periodic tunneling (or coupling) of the light propagating inside the fiber core to the cladding region as discussed by Gambling et al., Radiation Losses from Curved Single-mode Fibre, Electronics Letters, vol. 12, No. 12, (1976), pp. 567-69. Optimum coiled mode-filters should therefore avoid abrupt changes in the radius of curvature (*i.e.,* should allow for adiabatic bending) and moreover, the light in higher-order modes should be attenuated in a length of fiber coiled with a varying degree of curvature. Note that U.S. Patent No. 6,496,301 issued to Koplow et al. ignored periodic fiber losses induced by fiber bending and therefore reiterated the use of previously well known uniformly coiled fiber designs to operate as mode filters.

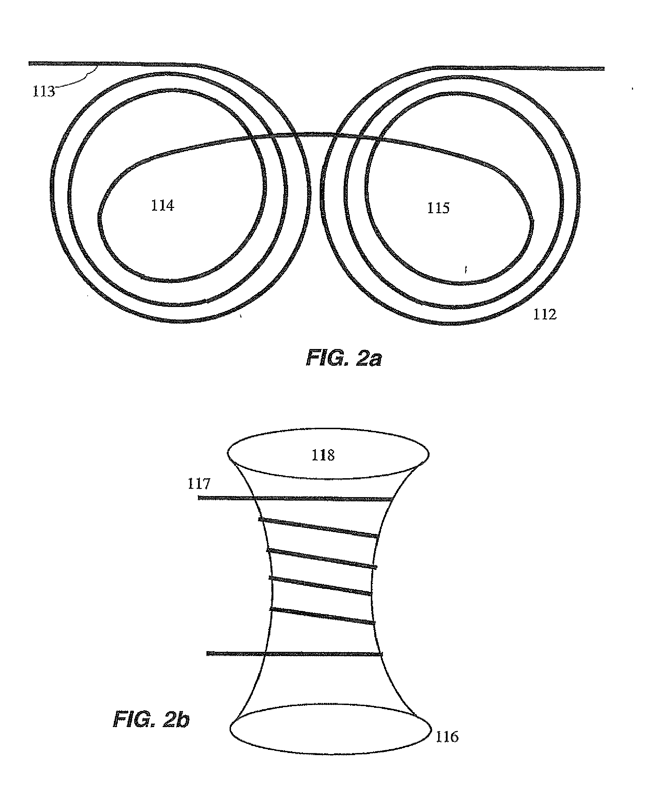

A variety of implementations can be considered that comply with the requirement for adiabatic bending as well as the requirement for distributing the loss over a fiber length exposed to a range of curvature radii. An exemplary embodiment of such a mode filter 112 is shown in FIG. 2a. Fiber 113 is coiled in a spiral form in two spirals 114 and 115, thereby providing for a smooth transition from a large radius of curvature to a smaller radius of curvature in spiral 114. A transition region with a smoothly varying radius of curvature is provided between spirals 114, 115 and second smooth transition from a small radius of curvature back to a large radius of curvature is provided in spiral 115.

An alternative embodiment 116 of coiling fibers with smoothly varying radius of curvature is shown in FIG. 2b, where fiber 117 is coiled onto a bi-conical form. The two embodiments shown in FIGS. 2a and 2b are to serve only as examples and a large number of additional geometries can be easily conceived. The two important parameters are 1) a smoothly varying radius of curvature throughout the fiber as well as 2) a smoothly varying radius of curvature throughout the whole fiber length where the fiber experiences any bend loss.

Referring back to FIG. 1, for positively chirped seed pulses, self-phase modulation in the amplification process leads to spectral broadening and the generation of output pulses with increased pulse chirp. By selecting a negatively chirped fiber pulse stretcher grating 106, self-phase modulation produces spectral narrowing, resulting in the generation of pulses with a spectral output width smaller than the injected spectral width and a reduction in pulse chirp. A minimization of the temporal and spectral amplitude ripple of the stretched pulses is required to maximize the spectral density of the amplified pulses, *i.e.,* the use of fiber grating pulse stretchers with a reflectivity ripple of less than 10% and ideally less than 1% is preferred. Moreover, to minimize ripple generation via polarization scrambling the use of non-polarization maintaining linear amplifiers is also preferred, though they are not absolutely required.

The spectral density of the output pulses is further maximized (or any spectral pedestal minimized) by the injection of pulses with a parabolic profile in the time domain. Parabolically shaped pulses can be generated from sech²- or Gaussian-shaped oscillator pulses using a fiber grating with a parabolic reflection profile with a bandwidth smaller than the oscillator pulse bandwidth. For specific machining applications, controlling the reflectivity profile of the fiber grating easily generates other pulse shapes, such as square or triangular pulses.

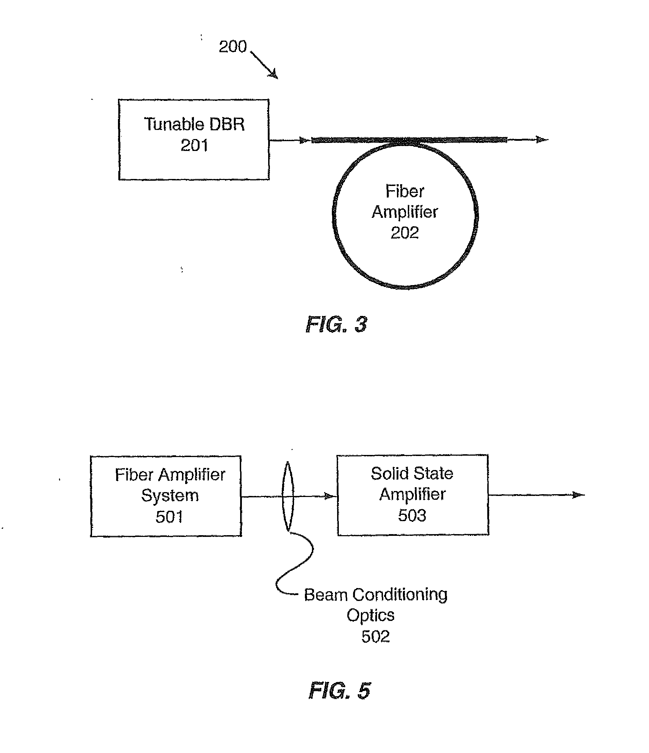

FIG. 3 displays an even more compact embodiment 200 for the generation and amplification of unidirectionally chirped pulses. A monolithic fast tunable diode laser 201 is used for generating broad bandwidth unidirectionally chirped optical pulses, which are amplified in fiber amplifier 202 or an equivalent fiber amplifier chain. The fast tunable diode laser 201 is preferably implemented as a three section, distributed Bragg reflector (DBR) diode laser as described in U.S. Patent No. 5,400,350 issued to Galvanauskas. The DBR diode laser comprises an active gain section, a phase control section and a Bragg reflector section. An application of current pulses to the phase control and Bragg reflector section of this laser at each laser pulse leads to a wavelength shift during the laser emission. By appropriate control of the magnitude and the timing for this tuning, a negatively or positively chirped pulse with pulse durations as short as 100 picoseconds can be generated. Spectral bandwidths in excess of several THz can so be generated greatly exceeding the capabilities for spectral broadening with conventional phase modulators, which are limited to around 20-40 GHz. Hence, such pulse sources are ideal for mitigating any nonlinear power limitations due to Brillouin scattering in high-power fiber amplifiers. Note that, in contrast to U.S. Patent No. 5,473,625 issued to Hansen et al.*,* no dithering of the output wavelength from the semiconductor laser is implemented, but rather the wavelength is varied predominantly only in one direction.

Semiconductor lasers are particularly useful for the generation of negatively chirped pulses to enable spectral compression in fiber amplifiers in the presence of self-phase modulation. An appropriate fiber amplifier chain follows the same design principles as discussed with respect to FIGS. 1 and 3. An advantage of the DBR system 200 is that the pulse sequence of the DBR diode laser can be freely selected electronically. In particular, repetition rates of several 10 kHz up to 1 GHz are possible with state of the art DBR laser diodes. Thus, arbitrarily spaced pulse trains, optimized for a particular machining application, can so be generated.

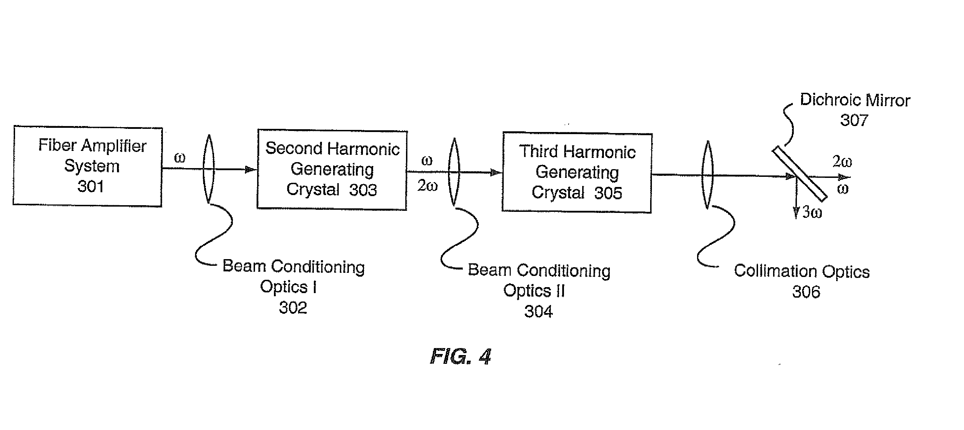

The high-power amplifiers described with respect to FIGS. 1 and 3 further enable efficient frequency up-conversion, particularly in conjunction with pulses with narrow spectral width, as, for example, generated by nonlinear spectral narrowing as discussed before. FIG. 4 displays an embodiment of high-power optical fiber amplifiers as applied to third harmonic generation. Workable schemes for efficient third harmonic generation starting from lasers (operating in the 1.0 micrometer wavelength region) are well known in the state of the art and typically rely on two nonlinear crystals are described in R.S. Craxton, High Efficiency Frequency Tripling Schemes for High Power Nd:Glass Lasers, IEEE Journal of Quantum Electronics, Vol. 17 (1981), p. 1771. For high conversion efficiency, the use of LiB₃O₅ (LEO) as a nonlinear crystal as described in U.S. Patent No. 4,826,283 issued to Chuangtian et al. and in Wu et al., Highly efficient ultraviolet generation at 355nm in LiB3O5, Optics Letters, Vol. 14 (1989), p. 1080, is preferred.

In the embodiment shown in FIG. 4, the fiber amplifier system 301 is preferably based on either Nd or Yb fiber amplifiers and used for third harmonic generation. The fiber amplifier system 301 is realized as one of the compact system 100 (FTG. 1) or the DBR system 200 (FIG. 3). The output pulse of a fiber amplifier system 301 passes the beam conditioning optics 302 and is partially converted to the second harmonic in the second harmonic generating crystal 303. Both the unconverted fundamental wavelength radiation and the generated second harmonic radiation passes the beam conditioning optics 304 and are frequency mixed in the third harmonic generating crystal 305 to generate third harmonic radiation. The third harmonic radiation is collimated by the collimation optics 306 and separated by the dichroic mirror 307 from the remaining fundamental and second harmonic radiation. The dichroic mirror 307 has high reflectivity for the third harmonic radiation and high transmittivity for the fundamental wavelength radiation and for the second harmonic radiation. The beam conditioning optics 302 and 303 provide optimized beam sizes in the harmonic generation crystals 303 and 305 for efficient wavelength conversion. The beam conditioning optics 302 and 304 may comprise waveplates for providing optimal polarizations of the incident waves in the harmonic generation crystals. The beam conditioning optics 304 may also comprise elements to compensate the spatial walk off between the fundamental and the second harmonic arising in the second harmonic generating process. In another embodiment (not shown), the third harmonic generating crystal 305 is replaced by a fourth harmonic generating crystal that converts the second harmonic radiation into fourth harmonic radiation. The dichroic mirror 307 has high reflectivity for the fourth harmonic radiation and high transmittivity for the fundamental wavelength radiation and the second harmonic radiation.

In both embodiments, the use of a narrow spectral width, high pulse energy fiber amplifier has several advantages. For efficient nonlinear conversions, high peak power as well as several millimeter long nonlinear crystals are necessary. The product of acceptance bandwidth and usable length of nonlinear crystals for harmonic conversion is approximately constant. The fiber amplifier systems described in the compact system 100 or the DBR system 200 can be designed to provide both the high peak power and a narrow spectral bandwidth matched to several mm long nonlinear crystals for efficient wavelength conversion.

In a working example, the center wavelength of a Yb-fiber amplifier system is 1030 nanometers. The second harmonic generating crystal 303 is realized as LBO cut at θ = 90° and ϕ= 0°. The crystal is type I non-critically phase-matched by heating the crystal to approximately 467K. Noncritical phase-matching has the advantage of no walk off between the fundamental and the second harmonic radiation. The third harmonic generating crystal 305 is realized as LBO cut at θ ∼ 53.3° and ϕ= 90°. The crystal is type II critically phase-matched and heated to approximately 350K. In this working example, the acceptance bandwidth is limited by the acceptance bandwidth for the third harmonic generation process, which is calculated to be 11.54 nanometers divided by the crystal length in millimeters for the fundamental wavelength radiation. This corresponds for a 19 millimeter long, third harmonic generation LBO crystal to an acceptance bandwidth of 0.6 nanometers for the fundamental wavelength radiation centered at 1030 nanometers. Spectral bandwidths of 0.6 nanometers can be achieved for 1 nanosecond pulses with energies >100 microjoules when using cladding pumped Yb fiber power amplifiers with a core diameter of 30 micrometers and appropriately selected narrow spectral injection linewidths, *i.e*., spectral linewidths < 0.5 nanometers, as discussed above with respect to the working example in FIG. 1. These Yb power amplifiers are preferably polarization maintaining, where both polarization maintaining multi-mode, polarization maintaining holey fibers and polarization maintaining large core air-clad fibers can be implemented. Even more exotic fiber designs comprising multiple cores, ring-cores as well as fibers with slab-type cores can be considered.

When exploiting spectral compression, spectral linewidths of 0.6 nanometers can be obtained for 100 microjoules pulses with widths in the 100 picosecond to 1 nanosecond range, allowing for improved third-harmonic conversion efficiency due to the increased pulse peak power.

Generally, the current state of the art uses bulk Q-switched lasers or bulk amplified mode locked lasers for harmonic generation to the ultraviolet spectral region. Bulk Q-switched lasers emit pulses with relatively high pulse energy but with repetition rates limited to 150 kHz with current state of the art. On the other hand, bulk mode locked lasers emit pulses of relatively low pulse energy at a typical repetition rate of 100 MHz. The embodiment shown in FIG. 4 has the ability to provide high-energy pulses with repetition rates in the 100 kHz to 1 MHz range for harmonic generation, which is not easily accessible with state of the art Q-switched or mode locked laser sources. The same consideration also applies to the generation of high repetition rate high-energy IR pulses. For example, high-energy IR pulses can be generated via parametric processes in periodically poled LiNbO₃ and GaAs.

Though fiber-based sources are ideal for the generation of high energy ultraviolet and IR pulses, for 1 nanosecond pulses energy levels beyond 1-10 millijoules are not easily accessible even with optimized fiber designs. In this case, it is useful to improve the output pulse energy with solid-state booster amplifiers, as shown in FIG. 5. Fiber amplifier system 501 is realized as one of the compact system 100 or the DBR system 200 described in FIGS. 1 and 3. The output pulse of the fiber amplifier system 501 is mode-matched by beam conditioning optics 502 to the fundamental mode of the solid-state amplifier 503. The solid-state amplifier 503 can be a slab, disc or rod amplifier, and preferably a regenerative amplifier, which are preferably directly diode pumped. Solid-state amplifiers are well known in the state of the art and will not be described further.

The embodiment displayed in FIG. 5 has the advantage that the gain bandwidth of the solid-state amplifier can be matched to the fiber amplifier system. For example, 1 nanosecond pulses with a spectral bandwidth of 0.6 nanometers and a pulse energy exceeding 100 microjoules, centered at a wavelength of 1064 nanometers can be generated in a fiber amplifier chain in conjunction with a diode seed laser, for injection into a Nd:YVO₄ amplifier, which has a spectral bandwidth of approximately 0.9 nanometers. As another example, a mode locked Yb-fiber oscillator with center wavelength of 1064 nanometers and a bandwidth of several nanometers can be amplified and spectrally narrowed as described in embodiment 100 and matched to the gain bandwidth of the Nd:YVO₄ solid-state amplifier. Thus, 100 picosecond pulses with an energy of around 100 microjoules and higher can be generated in a fiber amplifier chain and efficiently amplified in a subsequent solid-state amplifier. Without exploitation of spectral narrowing, the pulse energies from fiber amplifier chains designed for the amplification of 100 picosecond pulses in bulk Nd:YVO₄ amplifiers has to be reduced to avoid spectral clipping in the bulk amplifiers. Spectral narrowing is indeed universally applicable to provide high-energy seed pulses for narrow line-width solid-state amplifiers. For the example of bulk Nd:YVO₄ amplifiers, spectral narrowing is preferably implemented for pulse widths in the range of 20 picoseconds to 1000 picoseconds.

Bulk solid-state booster amplifiers are also useful to increase the energy of pulses generated with fiber based chirped pulse amplification systems. Chirped pulse amplification is generally employed to reduce nonlinearities in optical amplifiers. The implementation of chirped pulse amplification is most useful for the generation of pulses with a width < 50 picoseconds. Due to the limited amount of pulse stretching and compression that can be achieved with chirped pulse amplification schemes, stretched pulses with a width exceeding 1-5 nanoseconds are generally not implemented. Thus, optical damage limits the achievable pulse energies from state of the art fiber based chirped pulse amplification systems (assuming fiber power amplifiers with a core diameter of 30 micrometers) to around 1 millijoule. Single stage bulk solid-state amplifiers can increase the achievable pulse energies by another factor of 10-1000 and even higher pulse energies can be obtained with multi-stage and regenerative bulk amplifiers.

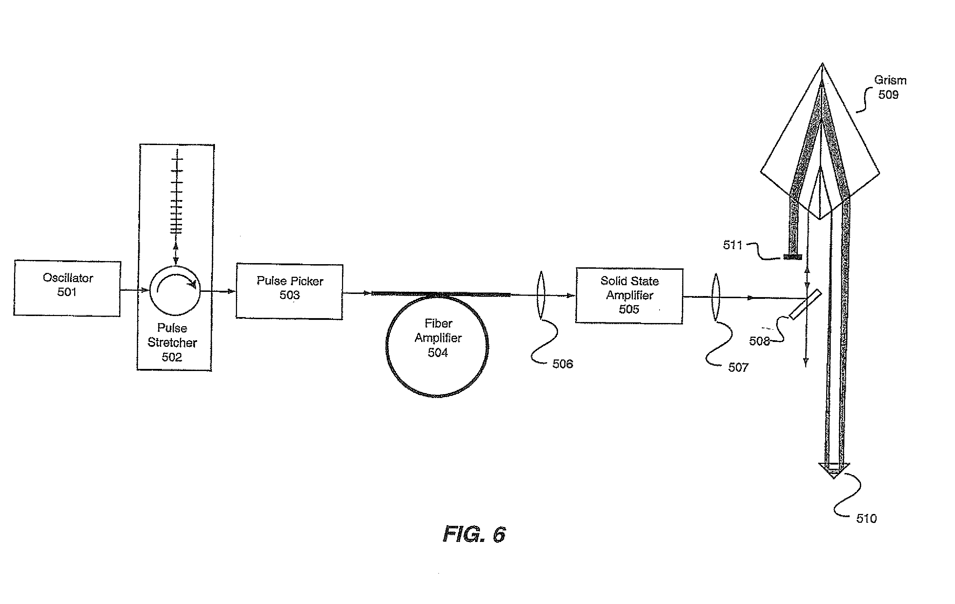

A generic scheme 500 for the amplification of the output of a fiber based chirped pulse amplification system in a bulk optical amplifier is shown in FIG. 6. Short femtosecond-picosecond pulses with pulse energies of a few hundred picojoules are generated in fiber oscillator 501. The pulses from the oscillator are stretched in pulse stretcher 502 to a width of 5 picoseconds to 5 nanoseconds. The pulse stretcher is preferably constructed from a chirped fiber grating pulse stretcher as discussed with respect to FIG. 1 and can also be constructed from a simple long length of solid core, holey, or air-hole fiber as well as bulk optical gratings as well known in the state of the art. A pulse picker 503 reduces the repetition rate of the oscillator to the 1 kHz - 1 MHz range to increase the pulse energy of the amplified pulses. A fiber amplifier chain represented by a single fiber 504 is further used to increase the pulse energy to the microjoule-millijoule level.

The amplifier chain can be omitted when sufficient pulse energy is available from the oscillator. Generally, for example for the seeding of conventional regenerative amplifiers operating in the 1000 - 1100 nanometer wavelength range, seed pulse energies of the order of 1 nanojoule are desired. For a Ti:sapphire regenerative amplifier, it was shown that a lower pulse energy was sufficient to suppress amplified spontaneous emission in the amplification process (Hariharan et al., Injection of Ultrafast Regenerative Amplifiers with Low Energy Femtosecond Pulses from an Er-doped Fiber Laser, Opt. Communications. Vol. 132, pp. 469-73 (1996); however in practice, higher seed pulse energies are desired for actual commercial regenerative amplifier seeders; clearly by supplying higher seed energies, larger optical losses and some optical misalignments between seeder and regenerative amplifier can be tolerated. Suitable pulse energies of the order of 1 nanojoule can be directly generated from modelocked fiber oscillators, fiber MOPAs incorporating modelocked fiber oscillators or fiber oscillators in conjunction with only one additional isolated fiber amplifier.

Appropriate mode matching optics 506 are then used to couple the output of amplifier chain 504 into the bulk solid-state amplifier 505. The bulk solid-state amplifiers based on rods, and slabs as well as thin disk concepts can be implemented. Appropriate bulk amplifier material are based, for example, on Nd:Vanadate, Nd:YAG, Nd:YLF, Yb:YAG, Nd and Yb: glass, KGW, KYW, S-FAP, YALO, YCOB, GdCOB, and others. Appropriate bulk amplifier materials and designs are well known in the state of the art and will not be discussed further. A collimation lens 507 directs the output of the bulk solid-state amplifier to the input of the compressor assembly. To minimize the size of a chirped pulse amplification system employing narrow bandwidth Nd-based crystals such as Nd:YAG, Nd:YLF, Nd:YVO₄, a grism compressor is preferably implemented. Particularly, for wider bandwidth materials such as Yb:glass, Yb:KGW and Yb:KYW, Treacy compressors are readily incorporated for pulse compression, as only standard optical components are required. Alternatively, the use of a grism based compressor can be implemented. The use of Treacy compressors is not further discussed here, as this is well known in the state of the art.

The optical beam is directed via mirror 508 to the grisms 509 and an additional folding grism 510 is used to minimize the size of the compressor. Mirror 511 completes the compressor assembly. These compressor assemblies have previously been used to compensate for third-order dispersion in wide-bandwidth chirped pulse amplification systems (*i.e.* chirped pulse amplification systems with a bandwidth > 5 nanometers). No prior art exists applying grism technology to narrow bandwidth chirped pulse amplification systems (*i.e.* chirped pulse amplification systems comprising amplifiers with a spectral bandwidth < 5 nanometers).

In an exemplary embodiment, fiber oscillator 501 generates 5 picosecond pulses, which are stretched by a chirped fiber grating stretcher to a width of 1 nanosecond. After amplification in the fiber amplifier chain, a pulse energy of 50 microjoules is obtained at a repetition rate of 10 kHz. Further amplification in a Nd:YVO₄ solid-state booster amplifier generates a pulse energy of 2 millijoules. After recompression in the bulk grating compressor, 10 picosecond pulses with an energy of 1 millijoule are obtained. To ensure a compact design for the bulk grating compressor, preferably grists with a groove density of 2800 l/mm are implemented. The whole compressor can then fit into an area of about 0.6×0.2 meters by folding the optical beam path only once.

The high-energy fiber based pulse sources discussed here are ideal for a variety of micro-processing applications. The need for miniaturization across many industries has created new challenges for lasers to fabricate or process very tiny components. The key aspects of any micro processing application requires a very sharply focused beam with sufficient energy to achieve a fluence higher than a certain threshold fluence to be irradiated on to the processing surface. Also, processing of material as cleanly as possible with minimal thermal damage to the surrounding area is highly desirable. Once this is accomplished, from the manufacturing perspective a higher repetition rate of a laser is always attractive to any application for increased throughput. The high-energy laser fiber based laser sources described above provide an ideal combination of short pulse width, (to achieve clean removal of material with minimal thermal damage to the surrounding areas), best possible beam quality (to achieve smallest possible focused laser beam diameter at the target), and higher repetition rate (to achieve higher throughput). In addition, the ability to deliver pulses with the above highly desirable characteristics in an ultraviolet wavelength region, extends the reach of these lasers to process metals, non-metals, and organic materials.

Specific examples of micro processing applications that can be achieved by lasers described above comprise:
(a) High energy laser designs delivering picosecond and femtosecond pulses are preferred for thin material modification processes - applications such as mask repair, chip repair, display (LCD) repairs, micro marking of the surfaces, surface hardening, surface texturing, etc. where a very thin layer of material needs to be processed.
(b) Laser designs delivering femtosecond pulses are preferred for subsurface modification of transparent materials. Applications such as subsurface marking in glass or other transparent material, fabrication of subsurface waveguides in a transparent material, fabrication of subsurface channels for a micro-fluidic or bio-chip type application, etc. are examples of subsurface material modification.
(c) Laser designs delivering high-energy ultraviolet pulses, and specifically high-energy ultraviolet pulses with picosecond widths, are preferred for organic material ablation. The fabrication of microelectronics components, ink-jet nozzle drilling, fabricating waveguides channels in polymeric materials, which require processing organic material such as polyimide, polycarbonate, PMMA, etc., are examples of organic material ablation processes requiring high energy ultraviolet pulses.
(d) Any of the lasers described above can be used in general micromachining applications - there are number of areas such as MEMS, photonics, semiconductors, etc., where micro machining of various components is required. Specific examples comprise, but are not limited to, machining features in bulk silicon, dicing of silicon and machining features in glass and other transparent materials.

The above description of the preferred embodiments has been given by way of example. From the disclosure given, those skilled in the art will not only understand the present invention and its attendant advantages, but will also find apparent various changes and modifications to the structures and methods disclosed. It is sought, therefore, to cover all such changes and modifications as fall within the spirit and scope of the invention, as defined by the appended claims and equivalents thereof.

The invention may be related to one or more of the following examples:
1. A pulse source generating pulses at a repetition rate greater than or equal to 1 kHz with a pulse width between 20 picoseconds and 20 nanoseconds and a pulse energy greater than or equal to 10 microjoules, said pulse source comprising: a seed source producing seed pulses; a fiber amplifier chain receiving said seed pulses and producing pulses with a pulse energy greater than or equal to 1 microjoule; said fiber amplifier chain comprising at least one large-core, claddingpumped polarization maintaining fiber amplifier with a core diameter greater than or equal to 12 micrometers; and at least one bulk optical element, wherein said bulk optical element frequency converts the pulses produced by said fiber amplifier chain.
2. A pulse source generating pulses at a repetition rate greater than or equal to 1 kHz with a pulse width between 20 picoseconds and 20 nanoseconds and a pulse energy greater than or equal to 10 microjoules, said pulse source comprising: a seed source producing seed pulses; a fiber amplifier chain receiving said seed pulses and producing pulses with a pulse energy greater than or equal to 1 microjoule; said fiber amplifier chain comprising at least one large-core, cladding- pumped polarization maintaining fiber amplifier with a core diameter greater than or equal to 12 micrometers; and at least one bulk optical element, wherein said bulk optical element amplifies the pulses produced by said fiber amplifier chain.
3. The pulse source according to example 2, where said bulk optical amplifying element comprises one of a Nd: glass, Yb: glass, Nd : YLF, Nd: YV04, Nd : KGW, Yb : YAG, Nd : YAG, KYW, S-FAP, YALO, YCOB and GdCOB amplifier.
4. The pulse source according to example 2, wherein said bulk optical element comprises a rare-earth-doped crystal.
5. The pulse source according to example 2, wherein said bulk optical element comprises a transition metal-doped crystal.
6. The pulse source according to example 1, wherein said bulk optical element enables frequency-down conversion.
7. The pulse source according to example 1, wherein said bulk optical element enables frequency-tripling.
8. The pulse source according to example 1, wherein said bulk optical element enables frequency-quadrupling.
9. The pulse source according to example 1, wherein said bulk optical element enables frequency-quintupling.
10. The pulse source according to examples 1 or 2, where said seed source comprises one of a semiconductor source of amplified spontaneous emission and a fiber-based source of amplified spontaneous emission.
11. The pulse source according to examples 1 or 2, wherein said seed source comprises one of a semiconductor laser, a micro-chip laser and a fiber laser.
12. The pulse source according to example 11, wherein said semiconductor laser seed source comprises means for increasing the spectral bandwidth of the pulses emitted from said semiconductor laser seed source.
13. The pulse source according to example 11, wherein said fiber laser seed source is mode locked.
14. The pulse source according to example 13, wherein said fiber laser seed source comprises a fiber grating pulse stretcher.
15. The pulse source according to examples 1 or 2, wherein said fiber amplifier chain comprises one of Nd, Yb, Er/Yb, Nd/Yb and Tm doped amplifier fibers.
16. The pulse source according to examples 1 or 2, wherein said fiber amplifier chain amplifies pulses in the 900-1500 nanometer wavelength range.
17. The pulse source according to examples 1 or 2, wherein said fiber amplifier chain amplifies pulses in the 1600-3000 nanometer wavelength range.
18. The pulse source according to examples 1 or 2, wherein a bandwidth of a pulse emerging from said fiber amplifier chain is larger than 0.1 nanometers.
19. The pulse source according to examples 1 or 2, wherein a bandwidth of a pulse emerging from said fiber amplifier chain is smaller than 1 nanometer.
20. The pulse source according to examples 1 or 2, wherein pulses emerging from said fiber amplifier chain have a rectangular temporal intensity profile.
21. The pulse source according to examples 1 or 2, wherein pulses emerging from said fiber amplifier chain have an arbitrary intensity profile.
22. A pulse source generating pulses with a pulse width between 20 picoseconds and 20 nanoseconds, wherein the pulse source comprises: a seed source producing seed pulses with a predetermined spectral width; and a fiber amplifier chain receiving said seed pulses and producing pulses with a pulse energy greater than or equal to 10 millijoules, wherein the spectral width of the pulses emerging from said amplifier chain is smaller than the spectral width of said seed pulses injected from said seed source.
23. The pulse source according to example 22, wherein the pulses produced by said amplifier chain are further amplified in a bulk optical amplifier.
24. The pulse source according to example 23, wherein said bulk optical amplifier comprises at least one of a Nd: glass, Yb: glass, Nd : YLF, Nd: YV04, Nd : KGW, Yb : YAG, Nd : YAG, KYW, S-FAP, YALO, YCOB and GdCOB amplifier.
25. A pulse source according to example 23, wherein said bulk optical amplifier comprises a rare-earth-doped crystal.
26. The pulse source according to example 23, wherein said bulk optical amplifier comprises a transition-metal-doped crystal.
27. The pulse source according to examples 22 or 23, wherein the pulses produced by said amplifier chain are frequency converted in a bulk optical element.
28. The pulse source according to example 27, wherein said bulk optical element enables frequency-down conversion.
29. The pulse source according to example 27, wherein said bulk optical element enables frequency-tripling.
30. The pulse source according to example 27, wherein said bulk optical element enables frequency-quadrupling.
31. The pulse source according to example 27, wherein said bulk optical element enables frequency-quintupling.
32. The pulse source according to example 22, wherein said seed source comprises a mode locked fiber laser emitting seed pulses that are stretched in a negatively chirped fiber grating pulse stretcher.
33. The pulse source according to example 32, wherein a reflectivity ripple of said grating is less than 10% of the peak reflectivity of said grating.
34. The pulse source according to example 32, wherein a reflectivity ripple of said grating is less than 1% of the peak reflectivity of said grating.
35. The pulse source according to example 22, wherein said seed source comprises a three-section semiconductor distributed Bragg reflector laser producing negatively chirped pulses.
36. The pulse source according to example 22, wherein at least the last amplifier of said amplifier chain receives negatively chirped pulses with a parabolic intensity profile.
37. A pulse source generating pulses with a pulse width between 10 femtoseconds and 50 picoseconds, wherein the pulse source comprises: a seed source producing seed pulses with a width less than or equal to 50 picoseconds; a pulse stretcher stretching said pulses produced by said seed source by first predetermined factor; a fiber amplifier chain receiving said stretched pulses from said pulse stretcher and producing pulses with a pulse energy greater and or equal to 20 nanajoules; at least one bulk optical amplifier element amplifying the pulses emitted from said fiber amplifier chain by a second predetermined factor; and a pulse compressor for recompressing the pulses emitted from said bulk optical amplifier element to near the bandwidth limit.
38. The pulse source according to example 37, wherein the first predetermined factor is equal to 30 and the second predetermined factor is equal to 2.
39. The pulse source according to example 37, wherein said bulk optical amplifier comprises at least one of a Nd: glass, Yb: glass, Nd : YLF, Nd: YV04, Nd : KGW, Yb : YAG, Nd : YAG, KYW, S-FAP, YALO, YCOB and GdCOB amplifier.
40. The pulse source according to example 37, wherein said bulk optical amplifier comprises a rare-earth-doped crystal.
41. The pulse source according to example 37, wherein said bulk optical amplifier comprises a transition-metal-doped crystal.
42. The pulse source according to example 37, wherein said pulse stretcher is based on a chirped fiber grating.
43. The pulse source according to example 42, wherein a reflectivity ripple of said grating is less than 10% of the peak reflectivity of said grating.
44. The pulse source according to example 42, wherein a reflectivity ripple of said grating is less than 1 % of the peak reflectivity of said grating.
45. The pulse source according to example 37, wherein said pulse compressor comprises at least one grism element.
46. The pulse source according to example 45, wherein said grism element has a groove density greater than or equal to 1800 lines/mm.
47. The pulse source according to example 37, further comprising at least one bulk optical element, wherein said bulk optical element frequency converts the pulses produced by said fiber amplifier chain.
48. The pulse source according to example 47, wherein said bulk optical element enables frequency-down conversion.
49. The pulse source according to example 47, wherein said bulk optical element enables frequency-tripling.
50. The pulse source according to example 47, wherein said bulk optical element enables frequency-quadrupling.
51. The pulse source according to example 47, wherein said bulk optical element enables frequency-quintupling.
52. A method of processing a target material comprising a laser source according to examples 1,2, 22 or 37 for generating a burst of laser pulses in a laser beam, wherein the method comprises: generating said burst of laser pulses having a fluence above the threshold value for modification or removal of said target material; delivering said burst of laser pulses to said target material using optical components; and applying said burst of laser pulses from said laser source to said target material.
53. A method of processing a target material according to example 52, wherein said burst of laser pulses are focused on, below or above a surface of said target material.
54. A method of processing a target material according to example 52, wherein said target material is a metal or an organic material or a semiconductor material, and said application of pulses to said target material comprises at least hole drilling, cutting or machining of a surface of said target material.
55. A method of processing a target material according to example 52, wherein said target material is transparent and said application of pulses to said target material comprises at least hole drilling, cutting, machining of a surface or machining subsurface features comprising altering of the index of refraction of said transparent material.
56. A method of processing a target material according to example 52, wherein said target material is a biological tissue and said application of pulses to said target material comprises at least removal, modification or diagnosis of said biological tissue.
57. A method of processing a target material according to example 52, wherein said application of pulses to said target material comprises at least modifying or ablating said target material.

## Claims

1. A pulse source generating pulses, said pulse source comprising:
a seed source producing seed pulses;
a fiber amplifier chain receiving said seed pulses and producing pulses with a pulse energy; and
at least one bulk optical amplifier element, wherein said bulk optical amplifier element amplifies the pulses produced by said fiber amplifier chain.

2. The pulse source according to claim 1, wherein said pulses are generated at a repetition rate greater than or equal to 1 kHz with a pulse width between 20 picoseconds and 20 nanoseconds.

3. The pulse source according to claim 1 or 2, wherein said pulses are generated with a pulse energy greater than or equal to 1 microjoule or greater than or equal to 10 microjoules.

4. The pulse source according to any one of claims 1 to 3, wherein said fiber amplifier chain comprising at least one large-core, cladding-pumped polarization maintaining fiber amplifier with a core diameter greater than or equal to 12 micrometers;

5. The pulse source according to any one of claims 1 to 4, where said bulk optical amplifying element comprises one of a Nd: glass, Yb: glass, Nd : YLF, Nd: YV04, Nd : KGW, Yb : YAG, Nd : YAG, KYW, S-FAP, YALO, YCOB and GdCOB amplifier.

6. A pulse source generating pulses, wherein the pulse source comprises:
a seed source producing seed pulses;
a pulse stretcher stretching said pulses produced by said seed source;
a fiber amplifier chain receiving said stretched pulses from said pulse stretcher and producing pulses;
at least one bulk optical amplifier element amplifying the pulses emitted from said fiber amplifier chain; and
a pulse compressor for recompressing the pulses emitted from said bulk optical amplifier element to near the bandwidth limit.

7. The pulse source according to claim 6 configured to generate pulses with a pulse width between 10 femtoseconds and 50 picoseconds.

8. The pulse source according to claim 6 or 7, further comprising at least one frequency converter which frequency converts the pulses produced by said fiber amplifier chain.

9. The pulse source according to claim 8, wherein said frequency converter enables frequency-down conversion.

10. The pulse source according to claim 8, wherein said frequency converter enables one of frequency-tripling, frequency-quadrupling, and frequency-quintupling.

11. The pulse source according to claim 6 or 7, wherein said pulse stretcher is based on a chirped fiber grating.

12. The pulse source according to any one of claims 6 to 11, comprising a frequency-modulated distributed Bragg reflector diode seed laser configured to generate nanosecond regime negatively chirped pulses with freely selectable repetition rates, wherein the bandwidth of the negatively chirped pulses is spectrally compressed.

13. The pulse source according to any one of claims 6 to 12, wherein the pulses are near-bandwidth limited.

14. The pulse source according to any one of claims 6 to 13, comprising a semiconductor laser configured to generate negatively chirped pulses to enable spectral compression in the fiber amplifiers of the amplifier chain in the presence of self-phase modulation.

15. The pulse source according to any one of claims 7 to 14,
wherein at least one fiber amplifier of said fiber amplifier chain comprises a non-linear amplifier that generates self-phase modulation, said self-phase modulation spectrally compressing pulses propagating in said non-linear amplifier to a spectral width smaller than the injected spectral width of said seed pulses, wherein the spectral width of the pulses emerging from said fiber amplifier chain is narrower than the spectral width of said seed pulses injected from said seed source, and the output of said fiber chain matches the gain bandwidth of a bulk optical amplifier element that receives and amplifies the pulses produced by said fiber amplifier chain, and
wherein the efficiency of any frequency conversion of pulses amplified with said bulk optical amplifier element is improved as a result of the narrowed spectral output and increased peak power of the pulses emerging from the fiber amplifier chain.

16. The pulse source according to any of claims 1, 6 or 7, further comprising at least one frequency converter which frequency converts the pulses produced by said fiber amplifier chain.
